# EUROPEAN PATENT APPLICATION

(11) **EP 2 123 982 A2**
(43) Date of publication of application: **25.11.2009**
(21) Application number: 09160875.2
(22) Date of filing: 21.05.2009
(51) Int. Cl.: F24D 17/00

(54) **A heat exchanger**

(30) Priority: 21.05.2008 GB 0809187
(71) Applicant: Eco Intellect Limited, Barrowford, Lancashire BB9 8PH (GB)
(72) Inventor: Bracewell, Neil, Barrowford, Lancashire BB9 8PH (GB)
(74) Representative: Waddington, Richard

(57) **Abstract**

The invention provides a heat recovery system 2 comprising a heat recovery device 4, a fluid supply means 6, and a tank 8 for storing fluid at an elevated temperature. The heat recovery device 4 is operable to transfer fluid at an elevated temperature to the fluid supply means 6, and the fluid supply means 6 is operable to supply said fluid to the tank 8. The heat recovery device 4 comprises at least one plate 30,32.

## Description

The invention relates to a heat recovery system. The invention further relates to a heat recovery device for use in the heat recovery system.

Most buildings, whether they are for commercial or domestic use, need a supply of hot water. For example, the hot water may be needed for use in central heating systems, washing machines, or dishwashers. Commonly, a hot water tank is provided in a building to store water and heat it to temperatures in the region of 70°C. When a portion of the hot water is run off for use in an appliance, this water is replaced in the tank by cold water, often mains cold water, which is generally at around 10°C.

The effect of adding cold water to the hot water tank is to cause an immediate reduction in the temperature of the water already present. To compensate, hot water tanks generally comprise a heat source which is triggered to heat the water. In normal use, the water may be reheated a number of times each day in order to maintain an elevated temperature. Consequently, the system consumes a large amount of heat energy. Thus, known systems are inefficient and expensive to operate.

It is an object of the invention to provide a heat recovery system which is energy efficient and economical to operate. It is a further object of the invention to provide a heat recovery device for us in the heat recovery system.

According to an aspect of the present invention there is provided a heat recovery system comprising a heat recovery device, a fluid supply means, and a tank for storing fluid at an elevated temperature, the heat recovery device being operable to transfer fluid at an elevated temperature to the fluid supply means, and the fluid supply means being operable to supply said fluid to the tank, wherein the heat recovery device comprises at least one plate.

Preferably, the fluid is a liquid, preferably water. The fluid may be a gas. Preferably, the fluid in the fluid supply means is at a temperature greater than the temperature of the fluid in a mains cold system. Preferably, the fluid supply means supplies water to the tank at a temperature greater than mains cold water. Preferably, the fluid in the tank is at a temperature of substantially between 50°C and 100°C, most preferably substantially at 70°C.

Preferably, the heat recovery system further comprises a buffer cylinder. Preferably, the buffer cylinder is located downstream of the heat recovery device. Preferably, the buffer cylinder is upstream of the tank. Preferably, the buffer cylinder is operable to store fluid from the heat recovery device. Preferably, the buffer cylinder is operable to supply fluid for use by a user or in an appliance. Preferably, the buffer cylinder is operable to supply fluid at an elevated temperature to the tank.

Preferably, at least one valve is provided in the heat recovery system. Said valve maybe operable to release fluid from the tank. Said valve may be operable to release fluid from the buffer cylinder.

Preferably, communication means are provided being operable to communicate to the at least one valve to cause said valve to open or close.

Preferably, when an amount of fluid is released from the tank, the fluid supply means is operable to supply an equal amount of fluid to the tank. In this manner, the tank is kept at substantially a constant level. Further, because the fluid supplied to the tank is at an elevated temperature, the temperature of the fluid in the tank is substantially maintained. Preferably, the fluid is supplied from the buffer cylinder.

Preferably, a temperature measurement means is provided in the heat recovery system, preferably in the tank. Preferably, the temperature measurement means is operable to communicate with a heating system for the tank. Preferably, the heating system is operable to switch on/off, preferably depending on the temperature of the fluid in the tank.

Preferably, the heat recovery device is at a temperature greater than the temperature in the buffer cylinder.

In this manner, the heating system, for example, an immersion heater, is only switched on when the temperature of the fluid in the tank drops to a predetermined value. For example, the immersion heater will not be triggered to switch on until the fluid in the tank reaches 60°C.

Preferably, the tank is operable to supply fluid at an elevated temperature, preferably, to an appliance, preferably a dishwasher, or washing machine. The tank may supply said fluid to a central heating system. Advantageously, the water supply means provides water at a temperature greater than mains cold water to the tank. In so doing, the temperature of the fluid in the tank is maintained at an elevated temperature, preferably 70°C.

The system provides a means of maintaining the temperature of the tank water without having an additional heat source, for example, a heating coil or heat exchanger within the tank. Advantageously, the system can save approximately substantially between 2 and 20Kw and is therefore economical and efficient.

Preferably, a plurality of heat recovery devices is provided in the heat recovery system. Preferably, said plurality of heat recovery devices are mounted parallel to each other. Preferably, said devices are mounted perpendicular to a duct. The heat recovery devices may be mounted parallel to the duct.

Preferably, the heat recovery device comprise a plurality of plates, most preferably two plates. Preferably, the plates are fixedly attached to one another. Preferably, the plates are welded together. Most preferably, the plates are welded together along a weld line which is located adjacent the periphery of at least one of said plates. Preferably, the weld line is spaced substantially between 5mm and 15mm from said periphery, most preferably substantially 10mm.

Preferably, the plates are alternatively or preferably additionally welded along a line which is located substantially centrally of said plates. Preferably, the central weld line extends from one side of the plates towards an opposite side. Preferably, the weld line extends substantially parallel to a top or bottom edge of the plates. Preferably, the plates are welded at a plurality of points across the surface of the plates. Preferably, the plurality of weld points are equi-distantly spaced apart, preferably being substantially between 35mm and 55mm apart, preferably substantially 45mm apart from each other. Preferably, the or each weld point is oval in cross section. Most preferably, each weld point is tear-drop shaped in cross section, preferably in plan view.

Advantageously, the plurality of welded points, or spot welds, ensures that fluid passing through the plates is evenly dispersed. Further, it has been shown that a weld point having a tear-drop cross section is highly advantageous. Specifically, such a weld point eliminates "hot spots" on the recovery device. As a result, there is a surprising advantageous effect that a constant heat recovery results.

Preferably, the heat recovery device comprises two plates being spot welded along a periphery, and being welded at a plurality points on the surfaces thereof. Preferably, said plates have substantially equal cross sectional area. The first plate may be thicker than the second plate. Preferably, the first and second plate may be of equal thickness. Preferably, the first plate comprises a lower layer and the second plate comprises an upper layer of the device.

Preferably, the first and second layer each comprises a series of raised members. Preferably, a spot weld is provided between adjacent raised members.

Preferably, the heat recovery device is substantially rectangular in plan view. Preferably, said device is substantially between 100 and 500cm in length and substantially between 30cm and 100cm in width. Most preferably, said device is substantially 225cm by 40cm in dimension. Preferably, the heat recovery device comprises an inlet and preferably an outlet. Preferably, the inlet and/or the outlet are each substantially between 15 and 30mm in diameter. Preferably, the inlet diameter is substantially equal to the outlet diameter, preferably each diameter being substantially 22mm. Preferably, the inlet an d outlet ar e spaced apart by preferably substantially between 20 an d 70 cm, preferably substantially 36cm.

Preferably, the heat recovery device is operable to allow fluid to pass therethrough. Preferably, the fluid is water, preferably cold water. The fluid may comprise an exhaust airflow, preferably a ho t exhaust gas. Preferably, the heat recovery device is manufactured from metals, preferably stainless steel. The heat recovery plate operates substantially in the manner of a heat exchanger, by transferring heat through a conducting wall, i.e. a plate, from one fluid to another.

Preferably, the heat recovery plate is positioned adjacent a cooking appliance, preferably a cooker hood. Preferably, the heat recovery plate is positioned in the canopy of a cooking appliance, preferably an industrial cooking appliance. Preferably, the heat recovery device forms part of a splash-back to a cooking appliance. The heat recovery device maybe the whole splash-back of a cooking appliance.

It has been found, that the area of wall directly behind the stove of a cooling appliance becomes very hot while the appliance is being used. Further, the canopy or cooker hood is in a direct path of the heat generated. In view of this, the heat recovery plate of the present invention is preferably placed in one or both of these locations, i.e. at the hottest locations around the appliance. These locations can often exceed 100°C. In so doing, the heat from the appliance is directly directed to the heat recovery plate. Therefore, maximum heat exchange can occur. Often, the heat generated from the cooking appliance is directed outside by a fume hood. The present invention utilises this heat in an energy efficient manner.

Preferably, the heat recovery device is located in a dirty exhaust duct, preferably a duct from a kitchen. Preferably, the heat recovery device is located in a flue of a boiler.

In a further aspect, the invention provides a heat recovery device comprising a body, the body comprising at least one plate, and a channel being operable to direct fluid through the body, wherein a plurality of weld points are provided on the plate.

Preferably, the heat recovery device comprises two plates, preferably welded together about a periphery. Preferably said plates are further welded along a weld line on the body. Preferably an inlet and preferably an outlet is provided on the body. Preferably, the or each plate comprises a plurality of raised members.

According to a further aspect, the invention provides a method of manufacturing a heat recovery device comprising the steps of:
a) joining a plurality of plates together along an outer edge;
b) further joining the plates together at a plurality of points on the surface of said plates; and
b) passing a gas through said joined plates to cause at least one of the plates to move away from said other plate.

Preferably, two plates are joined together, preferably by welding. Preferably, nitrogen gas is fed through the plates. Preferably, the upper plate is thinner, preferably substantially between 0.5 and 1.5cm, preferably substantially 1cm, than the lower plate which is preferably substantially between 1cm and 2cm, preferably substantially 1.5cm, such that the upper plate moves away from the lower plate at points which are not welded. The upper plate "bubbles" upwards when the gas is passed therethrough.

The resultant heat recovery plate has a lower substantially flat surface and an upper bubbled surface. Advantageously, this configuration allows a large surface area for the heat to contact the plate and thus enables efficient heat transfer to the fluid passing through the plates.

In a most preferred embodiment, the plates are of equal thickness. Preferably, nitrogen gas is fed through the plates. Preferably, both the upper plate and lower plate move away from each other at points which are not welded. The upper and lower plates "bubble" upwards when the gas is passed therethrough. The resultant heat recovery plate has an upper and lower bubbled surface. It has been found, advantageously, this configuration allows a large surface area for the heat to contact both plates and thus enables efficient heat transfer to the fluid passing through the plates.

Preferably, the heat recovery plates comprise fixing means for fixing to a wall or canopy or in an air duct. Further advantageously, particularly when the device is used in a kitchen environment, the arrangement allows the user to easily clean the surface.

In a further aspect, the invention provides a heat recovery kit comprising a heat recovery plate and a buffer cylinder as hereinbefore described.

Advantageously, the kit can be assembled to work alongside an existing hot water system in a domestic or commercial building.

All of the features described herein may be combined with any of the above aspects, in any combination.

An embodiment of the invention will now be described, by way of example only, with reference to the accompanying drawings, wherein:
Figure 1 shows a schematic perspective view of a heat recovery device according to the invention;
Figures 2a and 2b show a schematic side view and plan view respectively of a heat recovery device according to the invention;
Figure 3a and 3b show a schematic side view and plan view respectively of a heat recovery device according to the invention;
Figure 4 shows a schematic side sectional view of a heat recovery device according to the invention;
Figure 5 shows a schematic side sectional view of a heat recovery device according to the invention;
Figure 6 shows a schematic perspective view of a heat recovery device according to the invention;
Figure 7 shows a schematic plan view of a heat recovery system according to the invention;
Figure 8a shows a schematic perspective view of a heat recovery system according to the invention;
Figure 8b shows a schematic perspective view of an alternative embodiment of a part of the system of Figure 8a;
Figures 9a, 9b and 9c show a schematic plan view, an exploded schematic plan view, and a schematic side view respectively of a heat recovery device according to the invention;
Figures 10a, 10b, and 10c show a schematic plan view, an exploded schematic plan view, and a schematic side view respectively of a heat recovery device according to the invention;
Figure 10d shows a schematic side view of an alternative embodiment of a part of the device of Figures 10;
Figures 11a and 11b show computational fluid dynamic representations of a first and second embodiment respectively, of part of the heat recovery device according to the invention;
Figures 12a and 12b show computational fluid dynamic representations of a first and second embodiment respectively, of part of the heat recovery device according to the invention; and
Figures 13a and 13b show computational fluid dynamic representations of a first and second embodiment respectively, of part of the heat recovery device according to the invention.

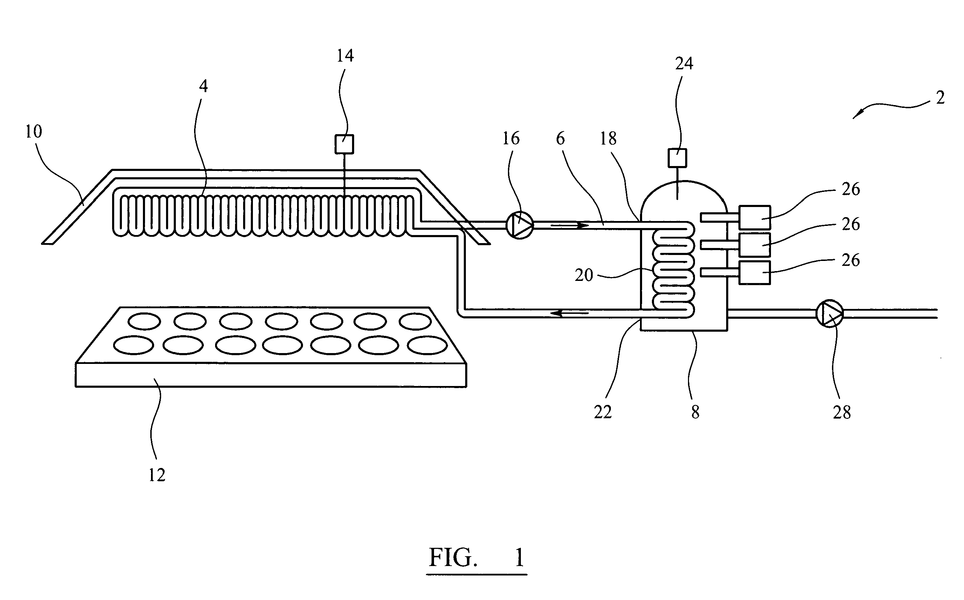

Figure 1 shows a heat recovery system 2 according to the present invention. The heat recovery system 2 comprises a heat recovery device 4, a fluid supply means 6 and a tank 8. The heat recovery device 4 is positioned in a canopy 10 of a cooking appliance 12. A temperature detector 14 is mounted in line with the heat recovery device 4 to monitor the temperature of said device 4.

A pump 16 is located in the fluid supply means 6 and is operable to circulate the fluid around the system 2. As shown in Figure 1 by the direction of the arrows, the fluid moves away from the heat recovery device 4 and to the tank 8. The fluid supply means 6 enters the tank 8 at an upper part 18 and convolutes into a concertina configuration 20. The fluid supply means 6 exits the tank 8 at a lower part 22 to be directed back towards the heat recovery device 4. A temperature sensor 24 is located adjacent the upper part 18 of the tank 8. Immersion heaters 26 are provided on the tank 8. Each immersion heater 26 operates at 3W.

Fluid, for example water, can be directed away from the tank 8 when needed in an appliance. A domestic hot water secondary pump 28 is provided to pump the water to the required destination. A supply of fresh water is fed into the system [not shown].

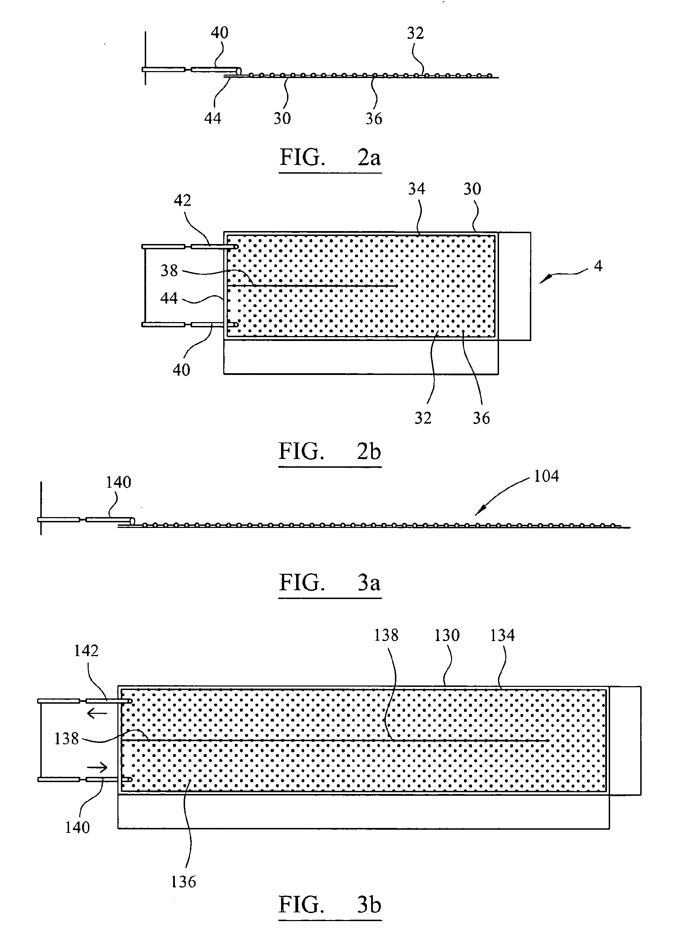

Figures 2a and 2b shown a heat recovery device 4 for use in the system 2. The heat recovery device 4 is generally rectangular in plan view and comprises a first plate 30 and a second plate 32. The first plate 30 is arranged to be a lower layer or surface and the second plate 32 is arranged to be an upper layer or surface. The second plate 32 is thinner than the first plate 30. It can be seen from Figure 2b that the plates 30, 32 are welded together around a periphery 34. Further, a plurality of spot welded points 36 are located across the plates 30, 32, together with a central weld line 38. An inlet 40 and an outlet 42 are located on the plates 30, 32 towards a first end 44. The spot welded points 36 will be discussed in further detail below.

Figures 3a and 3b shown an alternative embodiment of a heat recovery device 104. The device 104 is elongated in comparison to the device 4.

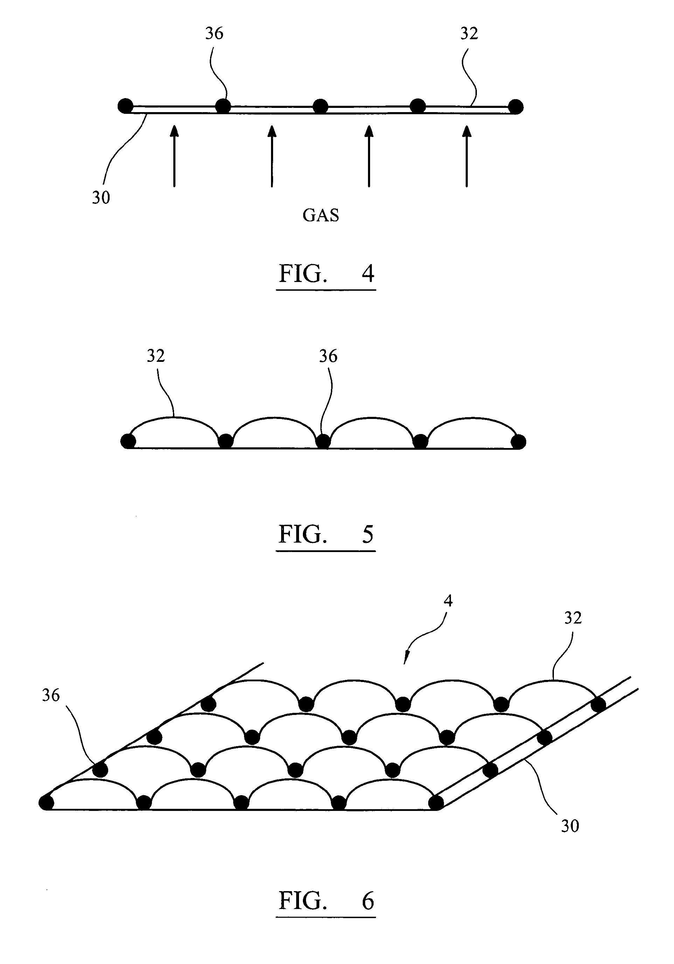

Figures 4, 5 and 6 show a sequence of steps for the manufacture of the device 4, 104. In a first step, the two plates 30, 32 are welded together around the periphery 34. The surface of the plates 30, 32 is then spot welded at a plurality of point 36. Gas, preferably nitrogen, is then passed through the sandwiched plates 30, 32 as shown in Figure 4. Due to the second plate 32 being manufactured from thinner material than the first plate 30, the second plate 32 buckles or bubbles upwards by the force of the gas as shown in Figure 5. Figure 6 shows a perspective view of the resultant surface of the second plate 32. In this arrangement, fluid entering the device 4 is channelled over a large surface area due to the bubbled effect. Advantageously, this provides a maximum area for heat exchange to occur.

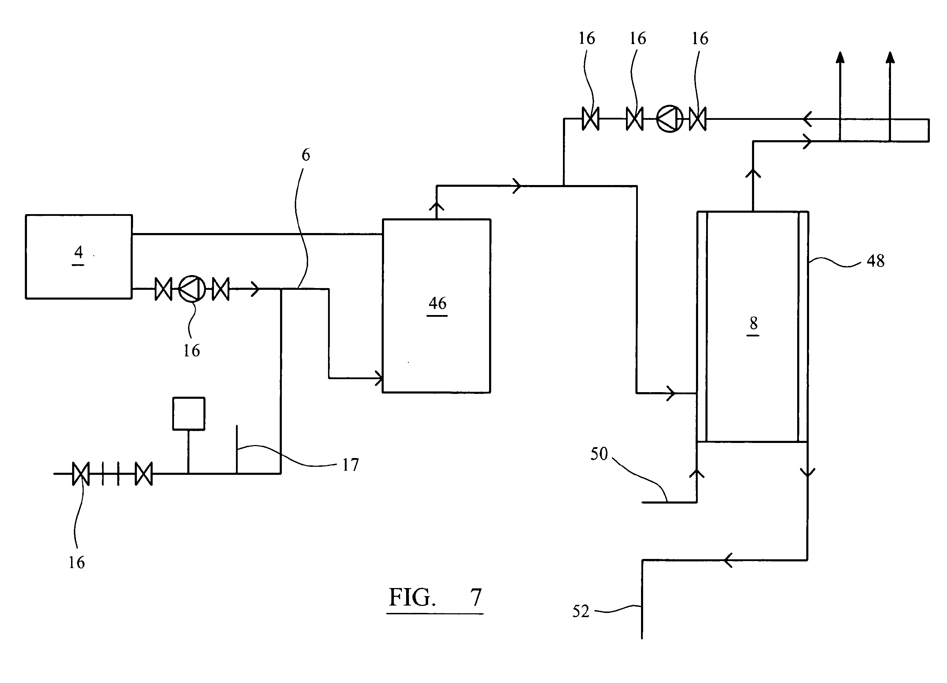

Figure 7 shows the heat recovery system 2 in position in a kitchen, preferably a commercial kitchen. In this arrangement, a buffer cylinder 46 is located downstream of the heat recovery device 4. In use, the heat recovery plate 4 operates as a heat exchanger such that heat from the cooking appliance is transferred to the water supply. The fluid supply means 6 directs fluid to the buffer cylinder 46. The water in the buffer cylinder 46 can be at a temperature of between approximately 30°C and approximately 100°C. This water can be fed to the tank 8 negating the need to supply said tank 8 with mains cold water. Advantageously, the tank 8 is fed with warm water. Pumps 16 and valves 17 control the flow of fluid to the buffer cylinder 46 and around the system 2.

A refrigerant heat recovery jacket 48 may be located on the tank 8 having hot gas from a compressor 50 directed therein, and an outlet 52 directing fluid to a condenser. High grade heat is discharged from a refrigeration circuit. Prior to the hot refrigerant gases being discharged to the atmosphere, said gases may pass through the heat recovery jacket 48. The refrigerant gas will condense within the jacket providing heat to the tank 8 to maintain or heat the water within said tank 8.

The invention utilises waste heat from, for example, kitchen equipment to feed into a hot water system. Provision of the buffer cylinder enables the recovery of low grade heat from extract hoods via the heat recovery device and fluid supply means. As heat is absorbed by the device it is then transferred to the buffer cylinder using a pressurised water circulation system. The temperature of fluid in the cylinder will be determined by the usage of hot water but it is envisaged that the temperature will be approximately 60 to 70°C.

The system is designed to replace the hot water drawn off a hot water tank with water at a temperature hotter than that in the main cold water supply.

Tests have shown that the system is capable of recovering 1 to 2 Kw per hour.

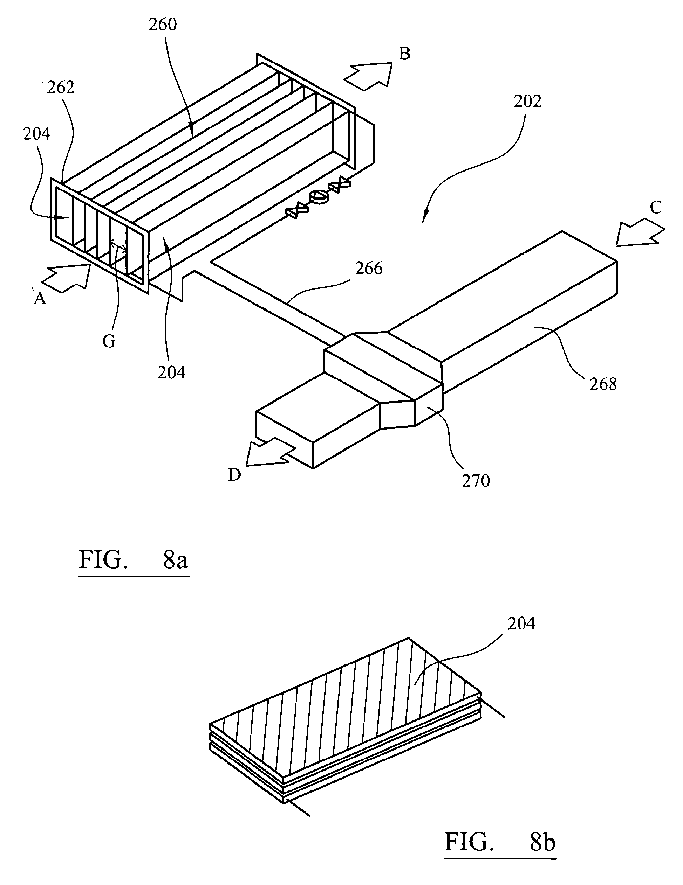

Figure 8a shows an alternative embodiment of a heat recovery system 202. The heat recovery system 202 is located in a dirty extract duct, for example, in the extract duct for a kitchen. The heat recovery system 202 comprises a heat recovery unit 260 which is provided in a kitchen air duct 262. The heat recovery unit 260 comprises a number (five shown in the figure) of heat recovery devices 204. The heat recovery devices 204 lay parallel to one another, perpendicular to the longitudinal axis of the air duct 262. A gap "G" of approximately 100mm is provided between each heat recovery device 204. Advantageously, the gap allows an operator to readily and easily gain access to the device to clean the surfaces thereof. Known coiled systems are inherently difficult to clean because of their coiled arrangement. As such, grease builds up on the coils causing an immediate fire hazard.

Advantageously, the orientation of the heat recovery devices 204 in Figure 8a encourages any oil or grease to run down and off the devices.

Figure 8b shows an alternative arrangement of heat recovery devices 204 which are orientated to lie coaxial with the longitudinal axis of the air duct 262.

An arrow A in Figure 8a indicates the direction of flow of warm air from a kitchen passing into the duct 262. Said flow A passes through the heat recovery unit 260 and exits the air duct 262 in the direction indicated by arrow B. A fluid is circulated through the heat recovery unit, through circulation pumps 266, preferably containing glycol. A clean air duct 268 in which fresh air enters the building (indicated by arrow C) is connected to the system 202. Heat recovered by the heat recovery devices 204 is passed to the heat recovery reheat battery 270 to warm incoming air. The warmed air passes out of the system 202 as indicated by arrow D.

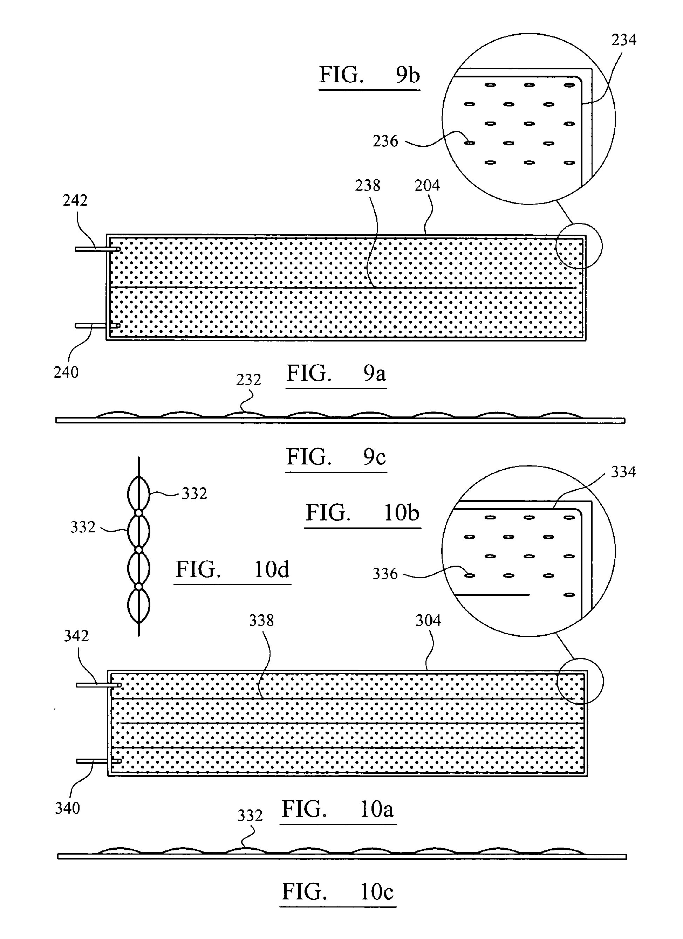

Figures 9a and 9b show the heat recovery device 204 in greater detail. In this embodiment, the weld line 238 extends to a point adjacent the periphery 234. The rise of each bubble in the second plate 232 is approximately 3mm.

Figures 10 and 10b show an alternative embodiment of the heat recovery device 304. In this embodiment, three weld lines 338 are provided on the plates 330,332. Figure 10d shows a preferred arrangement of said plates in which both sides of the heat recovery device 304 is "bubbled" or raised. This is achieved by both plates being of equal thickness such that when nitrogen is passed between them, inflation occurs on both sides which results in the increase in surface area.

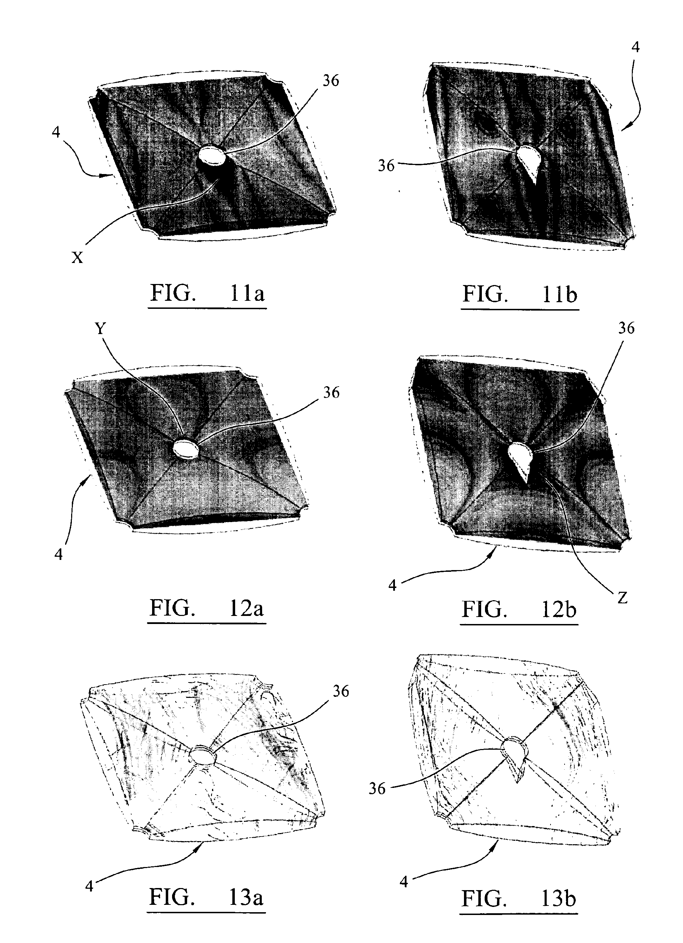

Figures 11 to 13 are computational fluid dynamic representations of two differently shaped spot welds. Figure 11a shows contours of velocity magnitude (m/s) on a spot weld having a substantially circular cross section. The darker shaded regions, in particular, the area marked X measures 1.52m/s. In contrast, the tear-drop shaped spot weld shown in Figure 11b shows fewer darker regions or "hot spots".

Figure 12a shows contours of static pressure on a circular spot weld. The region marked Y measures 2.27pascals. In contrast, the tear-drop spot weld shown in Figure 12b measures -2.51pascals in the region adjacent the weld, marked by the letter Z in the figure.

Figures 13a and 13b show cfd models of path lines of velocity magnitude (m/s) in relation to the circular and tear-drop shaped spot welds respectively. The path lines in Figure 13a are sporadic in comparison to those in Figure 13b.

The cfd modelling results show a shadow behind the spot weld is diminished with the tear-drop shaped weld. The anticipated benefits of this are a reduction in hot spots, a reduction in fouling in the same region, a reduction in pressure loss. The results show the tear-drop shaped spot weld gives an overall better heat transfer performance and pumping efficiency of heat recovery device.

Experiments have been carried out using the heat recovery system 202 shown in Figure 8a, together with heat recovery device 204 shown in Figure 8b. Table 1 below details the experimental conditions used to investigate the heat recovery efficiency of the heat recovery unit 260 in a kitchen air duct 262.

The experimental study showed the following: the heat recovery rate of the unit increased with flow rate of glycol; there was a high quality heat recovery below 0.5kg/s; a 10kW heat recovery was achieved with glycol exit temperature 5.6°C; the heat recovery rate increased sharply with increasing duct width, with an optimum around 1.3m.

Table 2 below is an example of experimental conditions used to investigate the heat recovery efficiency of the heat recovery unit in a cooker hood.

It was found that a 10kW heat recovery was achieved when a heat recovery device having a width of 1m was used.

The experiments showed that the heat recovery device design is proven to be highly effective in both a dirty extract heat recovery unit, and in a cooker hood. The size of the heat recovery device can be used to predict the running cost saving.

**Table 1**

| Testing Parameters | |
|---|---|
| Flow rate | 3.2 cu.m/s |
| Glycol | 0.01-1 l/s |
| Glycol inlet temperature | -5°C |
| Kitchen air inlet | 40°C |
| Air duct height | 600mm |
| Air duct width | 0.5-2m |
| Heat recovery device | 0.4x2.3m |
| Number heat recovery devices in the unit | Varied between 1 to 6 |

**Table 2**

| Testing Parameters | |
|---|---|
| Water flow rate | 0.01-100L/s |
| Air flow rate | 10kg/s |
| Water inlet temperature | 16°C |
| Cooker surface | 100°C |
| Extract air | Varied from 50-100°C |
| Heat recovery device length | 575-6090mm |
| Heat recovery device height | 100-1000mm |

A heat recovery system has been developed using heat recovery devices comprising plates. The heat recovery devices preferably comprise two plates welded together and shaped so that each plate has a corresponding bubbled surface. A number of said heat recovery devices can be mounted, preferably in parallel to each other, in a heat recovery unit. The unit can be placed in a dirty air stream, for example, the dirty air stream from a kitchen. The heat recovery devices absorb the heat within the air.

The thickness of the plates is approximately 6mm which ensures minimal restriction to the airflow. This eliminates the problem of known coiled systems which can be fire hazards, and the reduction in air flow due to dirt build up.

The heat/energy recovered from the exhaust air, by the heat recovery system, is absorbed, collected and released into the incoming air stream. This achieves a successful heat recovery. The heat recovery system allows for a reduction in fuel costs to heat a dwelling because of the ability of the system to recover heat/ energy.

The heat recovery system can also be located in a boiler flue, operating on the same principle as hereinbefore described to recover heat energy from the boiler flue exhaust.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving th e same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. A heat recovery system comprising a heat recovery device, a fluid supply means, and a tank for storing fluid at an elevated temperature, the heat recovery device being operable to transfer fluid at an elevated temperature to the fluid supply means, and the fluid supply means being operable to supply said fluid to the tank, wherein the heat recovery device comprises at least one plate.

2. A heat recovery system as claimed in claim 1, wherein a plurality of heat recovery devices is provided in the heat recovery system.

3. A heat recovery system as claimed in claim 2, wherein said plurality of heat recovery devices are mounted parallel to each other.

4. A heat recovery system as claimed in any one of the preceding claims, wherein the heat recovery device comprise two plates, the plates being fixedly attachable to one another.

5. A heat recovery system as claimed in claim 4, wherein the plates are welded together along a first weld line which is located adjacent the periphery of at least one of said plates, and along a second weld line which is located substantially centrally of said plates.

6. A heat recovery system as claimed in claims 4 or 5, wherein, the plates are welded at a plurality of weld points across the surface of the plates.

7. A heat recovery system as claimed in claim 6, wherein the plurality of weld points are equi-distantly spaced apart.

8. A heat recovery system as claimed in claims 6 and 7, wherein the or each weld point is tear-drop shaped in plan view.

9. A heat recovery system as claimed in claims 4 to 8, wherein said plates each comprise a series of raised members.

10. A heat recovery system as claimed in any one of the preceding claims, wherein the heat recovery device is positioned in a cooker hood.

11. A heat recovery system as claimed in any one of claims 1 to 9, wherein the heat recovery device is positioned in an exhaust gas flow.

12. A heat recovery system as claimed in any one of the preceding claims, wherein the fluid in the fluid supply means is at a temperature greater than the temperature of the fluid in a mains cold system.

13. A heat recovery system as claimed in any one of the preceding claims, wherein the heat recovery system further comprises a buffer cylinder being operable to supply fluid at an elevated temperature to the tank.

14. A heat recovery device comprising a body, the body comprising at least one plate, and a channel being operable to direct fluid through the body, wherein a plurality of weld points are provided on the plate.

15. A heat recovery device as claimed in claim 14, wherein two plates are provided, each said plate comprising a plurality of raised members between the weld points.
